# EUROPEAN PATENT SPECIFICATION

(11) **EP 0 450 695 B1**
(45) Date of publication and mention of the grant of the patent: **17.01.1996**
(21) Application number: 91200629.3
(22) Date of filing: 20.03.1991
(51) Int. Cl.: C08K 5/00

(54) **Copolymer compositions comprising a copolymer and one or more lubricating additives**
Copolymerzusammensetzungen, ein Copolymer und ein oder mehrere Gleitmittelzusätze enthaltend
Compositions de copolymère contenant un copolymère, et un ou plusieurs additifs lubrifiants

(30) Priority: 03.04.1990 GB 9007457
(43) Date of publication of application: 09.10.1991
(73) Proprietor: SHELL INTERNATIONALE RESEARCH MAATSCHAPPIJ B.V., NL-2596 HR Den Haag (NL)
(72) Inventor: Broekhuis, Antonius Augustinus, NL-1031 CM Amsterdam (NL); Groenland, Franciscus Christiaan, NL-1031 CM Amsterdam (NL); Beijen, Johan Maria, NL-1031 CM Amsterdam (NL)

(56) References cited:
- PATENT ABSTRACTS OF JAPAN vol. 7, no. 155 (C-175)(1300) 7 July 1983, & JP-A-58 067741 (SEKISUI KAGAKU KOGYO K.K) 22 April 1983,
- PLASTICS ENGINEERING. vol. 43, no. 9, October 1987, GREENWICH, CONN US pages 33-36; K. PERCELL & H. TOMLINSON: "SELECTIVE FATTY CHEMICALS AS MOLD-RELEASE AGENTS"

## Description

This invention relates to copolymer compositions comprising a major amount of an alternating copolymer of carbon monoxide with one or more olefinically unsaturated compounds and a minor amount of one or more lubricating additives.

The relevant copolymers are characterised by having a linear repeating structure [A-CO] which implies that a unit A is positioned left and right in between carbonyl units. A is a unit derived from an olefinically unsaturated compound. The term "copolymer" includes terpolymers in which different units A are present. Thus, the copolymers are linear copolymers of carbon monoxide with one or more olefinically unsaturated compounds. Examples of suitable olefinically unsaturated compounds yielding a unit A are ethene, propene, butene, octene, styrene and acrylate esters. The copolymers mentioned above are known per se, cf. US-A 3694412, EP-A 121965 and EP-A 181014. Whilst these copolymers have attractive physical and mechanical properties such as yield stress, tensile strength, impact strength and flexural modulus, in some instances their processing properties may leave room for improvement.

Copolymers with a high intrinsic viscosity, or limiting viscosity number (LVN), have better physical properties as engineering thermoplastic than copolymers with a lower intrinsic viscosity. Melt processing, e.g. extrusion, of copolymers, especially when they have an LVN of above about 2.0 dl/g (measured at 60 °C in m-cresol), is adversely affected by a poor melt stability which is apparent from a notable increase of the viscosity of the melt with increasing residence time. In particular in fibre and sheet applications, melt-extrusion is a critical step, even for copolymers with a low LVN. It is evident that improving the stability of the copolymer melt is desirable.

It is known that certain additives, such as carboxylic acid amides and aluminium hydroxyde, act as lubricating additives, in that they improve flow properties of the copolymers. Whilst the addition of said compounds to the copolymers brings about an improvement of flow properties, it appears that especially for melt processing operations in commercial production of moulded parts and extrusion at commercial scale of fibres and sheet, the flow properties still could be improved even further. It is the object of the present invention to provide copolymer compositions having further improved flow properties.

Copolymer compositions comprising a major amount of an alternating copolymer of carbon monoxide with one or more olefinically unsaturated compounds and a minor amount of one or more lubricating additives of the general formula X-R, in which X represents a polar moiety comprising 1-4 polar groups and R represents a monovalent hydrocarbyl radical having 5 to 30 carbon atoms which is attached to (one of) the polar group(s), wherein the polar moiety is a carboxylic acid amide group, are known from EP-A-326224. These lubricating additives include saturated fatty acid amides, fatty acid amides with unsaturated carbon-carbon bonds, and aromatic carboxylic acid amides. One skilled in the art would conclude that the presence of a carboxylic acid amide group as a polar moiety along with a hydrocarbyl structural element is a prerequisite for a non-polymeric organic material to be active as a lubricating additive in the copolymers. It will also be clear that any lubricating additive known for, e.g., polyolefins, will not necessarily bring about the desired flow properties in the copolymers, because the vast amount of carbonyl groups renders the copolymers quite different from other polymers.

It has now been found that, when the melt of the copolymers is held under shear, the addition of specific other oxygen containing compounds, which possess the said hydrocarbyl structural element next to one or more alcohol, ether, carboxyl or ester groups in their molecules, causes the occurrence of less friction in the melt and, surprisingly, the effect of these compounds on the increase in melt viscosity is more pronounced than the effect of fatty acid amides. This is even more surprising, as other compounds, known as lubricating additives for polyolefins, e.g. waxes, do not have any effect. They even render the copolymer unprocessable, possibly because they form a slipping layer between the polymer melt and metal surfaces. Said oxygen containing compounds act as lubricating additives in the copolymers and are superior to the known carboxylic acid amide lubricating additives. It has been found that, as a result of the better processing, the addition of these lubricating additives also leads to an improvement of mechanical properties of the processed copolymer, such as its impact resistance. Compositions of the copolymers with above mentioned oxygen containing compounds are novel.

Accordingly, the invention relates to novel copolymer compositions comprising a major amount of an alternating copolymer of carbon monoxide with one or more olefinically unsaturated compounds and a minor amount of one or more lubricating additives of the general formula X-R, in which X represents a polar moiety comprising 1-4 polar groups and R represents a monovalent hydrocarbyl radical having 5 to 30 carbon atoms which is attached to (one of) the polar group(s), wherein the polar moiety X is one of the following groups: (a) alcoholic -OH, (b) -O-R', (c) -CO-O-R', (d) -O-CO-R', and (e) -CO-OH, in which R' represents an alkyl group having up to 4 carbon atoms which may be substituted with 1 to 3 groups selected from (1) -O-R", (2) -CO-O-R" and (3) -O-CO-R", wherein each R", independently, represents hydrogen or an alkyl group having up to 4 carbon atoms.

The invention also relates to a process for improving flow properties of alternating copolymers of carbon monoxide with one or more olefinically unsaturated compounds comprising the addition thereto of a minor amount of one or more lubricating additives of the general formula X-R according to the invention.

Eligible lubricating additives of the invention may be, for example, 2-octadecanol, 4-isopropoxyeicosane, butyl hexadecanoate, ethyl 2,2,4,4,6,6-hexamethylheptanoate, menthoxyacetic acid, 2-(2'-hydroxyethyl) oxytetradecane, 4-dodecylphenyl ethyl 2'-butoxyadipate, and acetoxymethyl decanoate.

The expression "a minor amount" will be clear to those skilled in the art as meaning less than 50 %w based on the weight of the composition in cases where the compositions consist only of polymer and lubricating additive. Generally it will not be necessary to employ more than a certain amount to achieve an acceptable performance. Suitably the total amount of the lubricating additives ranges from 0.01 to 5 %w, more suitably from 0.05 to 3 %w, especially from 0.1 to 1 %w, based on the weight of the composition.

The hydrocarbyl radical R has been described hereinbefore as a monovalent radical, being attached to a polar group. It will be obvious to skilled readers that compounds X-R are conceivable which contain two or more polar groups in the polar moiety X and wherein the hydrocarbyl radicals R is not attached directly to one of the polar groups, but to the polyvalent alkyl radical R' interconnecting the polar groups. For example, methyl 4-methoxy-3-pentadecylpentanoate is conceivable as an equivalent of its isomer methyl 4-hexadecyloxypentanoate. On the other hand, such compounds are not as readily accessible by chemical synthesis as those wherein the hydrocarbyl radical R is attached to a polar group.

One skilled in the art will know that certain combinations of polar groups attached to one alkyl group may result in unstable compounds. For example, gamma-hydroxycarboxylic acids and certain analogous esters according to the invention will form gamma-lactones upon heating. The compounds thus formed in-situ generally fall within the scope of the invention and are, therefore, considered to be part of the invention.

Lubricating additives may suitably be used of which the molecules possess a polar moiety X containing one alcoholic -OH group. For example, suitable lubricating additives are 4-dodecylcyclohexylcarbinol, alpha-decylbenzylalcohol, 2-methyl-pentadecanol-2 and 1-dodecanol. Very good lubricating activity can be obtained with 1-docosanol.

Other lubricating additives of the invention have suitably a polar moiety X in the molecules which contains one carboxylic ester group -CO-O-R', in which R' represents an alkyl group having up to 4 carbon atoms which may be substituted with 1 to 3 groups selected from -O-R" and -O-CO-R", wherein each R", independently, represents hydrogen or an alkyl group having up to 4 carbon atoms. Such additives may be, for example, 2,3,4-trihydroxybutyl hexadecanoate, 2,3,4-trimethoxybutyl 4'-decylbenzoate and 2-acetoxyethyl oleate. Preferably, R' represents an alkyl group having 3 carbon atoms which may be substituted with 2 groups selected from -O-R" and -O-CO-R", wherein each R", independently, represents hydrogen or an alkyl group having up to 4 carbon atoms. Examples of such polar moieties are those which are derived from glycerol. Accordingly, preferred lubricating additives are, for example, glycerol 1,3-diacetate 2-monolaurate, 2,3-dimethoxypropyl hexadecanoate and 1,3-dibutoxy-propyl pentacosanoate. More preferably, R' represents a 2,3-dihydroxypropyl group, to the effect that more preferred lubricating additives are, for example, glycerol l-mono(2',4'-didecylbenzoate), glycerol 1-monooleate and glycerol 1-monoheptacosanoate. Glycerol 1-monostearate gives very good results.

Again other lubricating additives of the invention have suitably a polar moiety X in the molecules which contains a group -CO-O-R' or -O-CO-R', in which R' represents an alkyl group having up to 4 carbon atoms. Examples of such lubricating additives are montanyl acetate, 3-decylphenyl pivalate and isobutyl pentadecanoate. Preferably, the polar moiety contains a group -CO-O-R', in which R' represents an alkyl group having up to 4 carbon atoms, more preferably R' represents a methyl group. Preferred additives are, e.g., butyl stearolate and isopropyl 4-undecylphenylacetate, and more preferred additives are, e.g., methyl alpha-linolenate and methyl dodecanoate. Methyl montanate is an excellent lubricating additive.

Also when the polar moiety X contains one carboxyl group, the compounds X-R are suitable lubricating additives for the copolymers. Oleic acid, montanic acid, 4-cyclohexylbenzoic acid and palmetic acid are examples of such compounds. Stearic acid is a very efficient lubricating additive.

Although the hydrocarbyl radical R may contain 5-30 carbon atoms, it is advantageous to have a hydrocarbyl radical R which comprises 10-30 carbon atoms because this renders the additives less volatile. The radical may contain one or more aromatic or alicyclic ring structures, or its chain of carbon atoms may be branched. Examples of such aromatic ring structures are those of benzene and naphthalene. Alicyclic ring structures are, for example, those of cyclohexane, cycloheptane and norbornane. The hydrocarbyl radical R is preferably a primary radical, i.e. a radical of which the point of attachment to a polar group resides on a carbon atom which bears two hydrogen atoms. More preferably the hydrocarbyl radical R comprises a linear chain of carbon atoms, and most preferably it is also saturated. Lubricating additives derived from a primary radical R possessing a linear and saturated hydrocarbon chain are more stable in cases were degradation reactions via radical pathways play a role. Examples of the more preferred radicals R are the hydrocarbon chains of oleyl alcohol, linoleic acid, stearolic acid and linolenic acid. Examples of the most preferred radicals R are the hydrocarbon chains of myristic acid, stearyl alcohol, stearic acid, palmitic acid and montanic acid.

The lubricating additives may be used alone, or they may be used in combination with one or more additional additives which improve other properties of the compositions such as oxidative stability and UV stability. Such additional additives may be selected from the group formed by sterically hindered phenolic compounds, aromatic amines, hydroxybenzophenones, hydroxyphenylbenzotriazoles, aluminium hydroxides, acid amides of monocarboxylic acids, and copolymers of ethylene and acrylic acid or methacrylic acid. Some of these may be well-known, commercially available additives for polymers. Suitably the hindered phenolic compounds are selected from 2,5-dialkylphenols, from esters of a straight chain alcohol and a hydroxy,dialkylphenyl-substituted carboxylic acid, from 1,2-bis-(acetyl)hydrazines in which the acetyl group carries a hydroxy,dialkylphenyl substituent, from N,N'-bis-(acetoxyalkyl)oxalamides in which the acetyl group carries a hydroxy,dialkylphenyl substituent, and from alpha-N,omega-N-bis(acetyl)diamines in which the acetyl group carries a hydroxy,dialkylphenyl substituent. Suitable aromatic amines are selected from the group formed by the diphenylamines, such as 4,4'-bisbenzyl-diphenylamines or anilino-diphenylamines, and diaminonaphthalenes, such as N,N,N',N'-tetraalkylaminon-aphthalenes. A suitable type of aluminium hydroxide is bayerite.

The alternating copolymer of carbon monoxide with one or more olefinically unsaturated compounds which is part of the compositions of the invention may in particular be a copolymer of carbon monoxide with ethylene or a terpolymer of carbon monoxide, ethylene and propylene. Preferred co- or terpolymers are those having an LVN of from 1.0 to 5.0 dl/g, preferably from 1.3 to 4.0 dl/g, in particular from 2.1 to 3.0 dl/g.

The lubricating additives may be added to the copolymer by various continuous or discontinuous processes, for example, by dry blending and tumbling, by solvent deposition and removal of solvent by evaporation. The copolymer may be present in the form of a powder, or as granulate.

The compositions of this invention can be processed into articles of manufacture such as fibres, films, laminates, tubes, piping and articles having an intricate shape by conventional processing techniques, such as melt spinning, extrusion, co-extrusion, injection moulding and compression moulding.

The lubricating additives of this invention do not only improve the flow of the relevant carbon monoxide/-olefin co- and terpolymers, but also render the co- and terpolymer less prone to polymer degradation during melt processing. The performance of these lubricating additives compared to the performance of the known carboxylic acid amides is unexpected.

Thus they render processable certain types of copolymers which were hardly processable before the present invention.

### EXAMPLE 1

A granulate of a terpolymer comprising ethene, propene and carbon monoxide having an LVN of 1.36 dl/g (measured in m-cresol at 60 °C), a crystalline melting point of 222 °C and containing 0.5 %w of the n-octadecyl ester of 3-(3,5-di-t.butyl-4-hydroxyphenyl)propanoic acid and 0.5 %w 2,6-di-t.butyl-4-methylphenol (commercially available antioxidants), was mixed with samples of various additives by dry blending and tumbling in air for 85 minutes. Samples of the blends obtained and samples of the terpolymer without additives were transferred into a commercial torque rheometer (designed for characterisation of polyvinylchloride and equipped with two spindles) operated at 240 °C. The torque was measured at a speed of 60 rpm of one spindle and 40 rpm of the other spindle. The results are presented in Table 1.

**Table 1**

| Additive (%w) | Initial torque Nm | Rate of increase of torque, Nm/min |
|---|---|---|
| Examples: | | |
| Glycerol 1-monostearate (0.2) | 2.8 | 0.07 |
| Glycerol 1-monostearate (0.5) | 3.4 | 0.06 |
| Glycerol 1-monostearate (1.0) | 3.6 | 0.07 |
| -duplicate- | 3.6 | 0.06 |
| Stearic acid (0.2) | 3.6 | 0.10 |
| -duplicate- | 3.8 | 0.07 |
| Stearic acid (0.5) | 3.3 | 0.10 |
| -duplicate- | 3.8 | 0.10 |
| 1-Docosanol (1.0) | 3.6 | 0.04 |
| Methyl montanate (1.0) | 2.8 | 0.09 |
| -duplicate- | 2.8 | 0.06 |
| Glycerol 1-monostearate (0.5) and bayerite (0.5) | 3.1 | 0.04 |
| Comparative experiments: | | |
| None | 4.7 | 5.1 |
| -duplicate- | 4.5 | 5.3 |
| Stearamide (0.1) | 5.5 | > 5 |
| -duplicate- | 5.5 | > 5 |
| Stearamide (0.5) | 3.3 | 1.0 |
| -duplicate- | 3.2 | 1.1 |
| Stearamide (1.0) | 2.2 | 0.13 |
| -duplicate- | 2.8 | 0.10 |
| Lauramide (1.0) | 3.3 | 0.35 |
| -duplicate- | 3.3 | 0.36 |

### EXAMPLE 2

A terpolymer comprising ethene, propene and carbon monoxide in the form of a powder, having an LVN of 1.85 dl/g (measured in m-cresol at 60 °C) and a crystalline melting point of 222 °C and containing 0.5 %w of 3,5-di-t.butyl-4-hydroxytoluene (a commercially available antioxidant) was mixed with a sample of glycerol 1-monostearate by dry blending and tumbling in air for 5 minutes. Samples of the blend obtained and samples of the terpolymer without added glycerol 1-monostearate were injection moulded into 2 mm thick disks having a 60-mm diameter, using a nozzle temperature of 250 °C and a mould temperature of 70 °C. The disks were tested in an instrumented impact tester at a plunger speed of 4.43 m/s using a plunger of 15.7 mm diameter and a disk support of 42 mm. During the test the temperature of the disks was -10 °C. The results are summarised in Table 2.

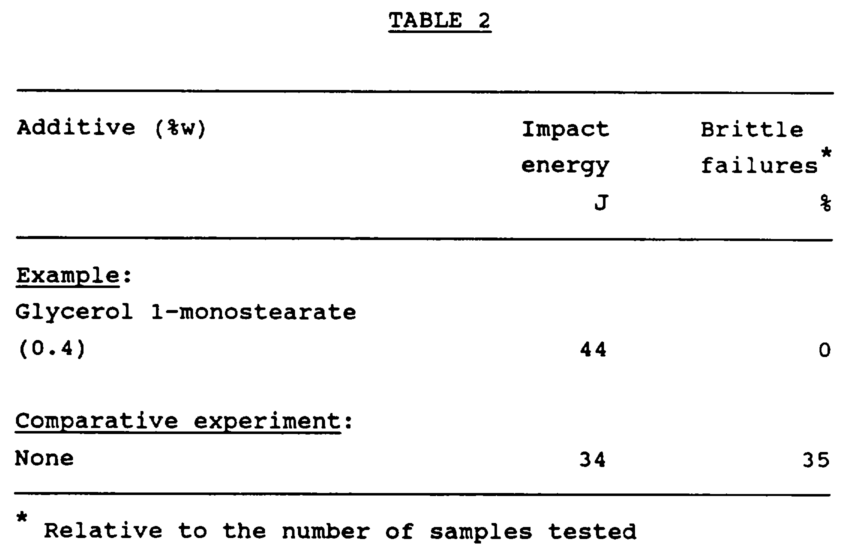

The compositions which contain glycerol 1-monostearate, stearic acid, 1-docosanol or methyl montanate are according to the invention, whereas the experiments involving stearamide and lauramide have been added for comparison. The values measured for the initial torque show that glycerol 1-monostearate, stearic acid, 1-docosanol and methyl montanate lubricate the polymer melt.

In all cases an increase of torque can be seen as a function of residence time in the rheometer. This increase is the result of cross-linking as a consequence of friction and intrinsic melt instability of the copolymers. When looking at the rate of increase of torque it is observed that this rate is diminished by all additives by their lubricating activity and that glycerol 1-monostearate, stearic acid, 1-docosanol and methyl montanate are in this respect more effective than stearamide and lauramide.

Example 2 shows that, as a result of better processing achieved with the lubricating additives of the invention, the processed terpolymer has an improved impact resistance, in that it shows a lesser tendency towards brittle failure and more impact energy can be absorbed.

The example shows very clearly that it is relatively less critical whether the polar moiety contains one or more hydroxy groups or a combination thereof with an ester group, or only an ester or a carboxylic ester group. In addition, the present lubricants may be combined with other additives of widely different nature, like sterically hindered phenolic compounds and aluminium hydroxide.

## Claims (Claims for the following Contracting State(s): BE, DE, FR, GB, IT, NL)

1. Copolymer compositions comprising a major amount of an alternating copolymer of carbon monoxide with one or more olefinically unsaturated compounds and a minor amount of one or more lubricating additives of the general formula X-R, in which X represents a polar moiety comprising 1-4 polar groups and R represents a monovalent hydrocarbyl radical having 5 to 30 carbon atoms which is attached to (one of) the polar group(s), wherein the polar moiety X is one of the following groups: (a) alcoholic -OH, (b) -O-R', (c) -CO-O-R', (d) -O-CO-R', and (e) -CO-OH, in which R' represents an alkyl group having up to 4 carbon atoms which may be substituted with 1 to 3 groups selected from (1) -O-R", (2) -CO-O-R" and (3) -O-CO-R", wherein each R", independently, represents hydrogen or an alkyl group having up to 4 carbon atoms.

2. Compositions as claimed in claim 1, characterised in that the lubricating additives are present in an amount of 0.05 to 3 %w, based on the weight of the composition.

3. Compositions as claimed in claim 2, characterised in that the lubricating additives are present in an amount of 0.1 to 1 %w, based on the weight of the composition.

4. Compositions as claimed in any of claims 1-3, characterised in that the polar moiety contains one alcoholic -OH group.

5. Compositions as claimed in any of claims 1-3, characterised in that the polar moiety X contains one carboxylic ester group -CO-O-R', in which R' represents an alkyl group having up to 4 carbon atoms which may be substituted with 1 to 3 groups selected from -O-R" and -O-CO-R", wherein each R", independently, represents hydrogen or an alkyl group having up to 4 carbon atoms.

6. Compositions as claimed in claim 5, characterised in that R' represents a 2,3-dihydroxypropyl group.

7. Compositions as claimed in any of claims 1-3, characterised in that the polar moiety X contains a group -CO-O-R' or -O-CO-R', in which R' represents an alkyl group having up to 4 carbon atoms, such as a methyl group.

8. Compositions as claimed in any of claims 1-3, characterised in that the polar moiety contains one carboxyl group.

9. Compositions as claimed in any of claims 1-8, characterised in that the hydrocarbyl radical R is a primary radical, and comprises a saturated linear chain of 10-30 carbon atoms.

10. Compositions as claimed in any of claims 1-3, characterised in that the additives are selected from the group formed by stearic acid, methyl montanate, 1-docosanol and glycerol 1-monostearate.

11. Compositions as claimed in any of claims 1-10, characterised in that it comprises as the copolymer a copolymer of carbon monoxide with ethylene or a terpolymer of carbon monoxide, ethylene and propylene, and in that the LVN of the co- or terpolymer is from 1.0 to 5.0 dl/g, in particular from 1.3 to 4.0 dl/g measured at 60 °C in m-cresol.

12. Process for improving flow properties of alternating copolymers of carbon monoxide with one or more olefinically unsaturated compounds comprising the addition thereto of a minor amount of one or more lubricating additives of the general formula X-R as defined in any of claims 1-10.

## Claims (Claims for the following Contracting State(s): ES)

1. Process comprising adding a minor amount of one or more lubricating additives to a major amount of an alternating copolymer of carbon monoxide with one or more olefinically unsaturated compounds, which lubricating additive is of the general formula X-R, in which X represents a polar moiety comprising 1-4 polar groups and R represents a monovalent hydrocarbyl radical having 5 to 30 carbon atoms which is attached to (one of) the polar group(s), wherein the polar moiety X is one of the following groups: (a) alcoholic -OH, (b) -O-R', (c)-CO-O-R', (d) -O-CO-R', and (e) -CO-OH, in which R' represents an alkyl group having up to 4 carbon atoms which may be substituted with 1 to 3 groups selected from (1) -O-R", (2) -CO-O-R" and (3) -O-CO-R", wherein each R", independently, represents hydrogen or an alkyl group having up to 4 carbon atoms.

2. Process as claimed in claim 1, characterised in that the lubricating additives are added in an amount of 0.05 to 3 %w, based on the weight of the composition.

3. Process as claimed in claim 2, characterised in that the lubricating additives are added in an amount of 0.1 to 1 %w, based on the weight of the composition.

4. Process as claimed in any of claims 1-3, characterised in that the polar moiety contains one alcoholic -OH group.

5. Process as claimed in any of claims 1-3, characterised in that the polar moiety X contains one carboxylic-ester group -CO-O-R', in which R' represents an alkyl group having up to 4 carbon atoms which may be substituted with 1 to 3 groups selected from -O-R" and -O-CO-R", wherein each R", independently, represents hydrogen or an alkyl group having up to 4 carbon atoms.

6. Process as claimed in claim 5, characterised in that R' represents a 2,3-dihydroxypropyl group.

7. Process as claimed in any of claims 1-3, characterised in that the polar moiety X contains a group -CO-O-R' or -O-CO-R', in which R' represents an alkyl group having up to 4 carbon atoms, such as a methyl group.

8. Process as claimed in any of claims 1-3, characterised in that the polar moiety contains one carboxyl group.

9. Process as claimed in any of claims 1-8, characterised in that the hydrocarbyl radical R is a primary radical, and comprises a saturated linear chain of 10-30 carbon atoms.

10. Process as claimed in any of claims 1-3, characterised in that the additives are selected from the group formed by stearic acid, methyl montanate, 1-docosanol and glycerol 1-monostearate.

11. Process as claimed in any of claims 1-10, characterised in that it comprises as the copolymer a copolymer of carbon monoxide with ethylene or a terpolymer of carbon monoxide, ethylene and propylene, and in that the LVN of the co- or terpolymer is from 1.0 to 5.0 dl/g, in particular from 1.3 to 4.0 dl/g measured at 60 °C in m-cresol.

## Patentansprüche (Patentansprüche für folgende(n) Vertragsstaat(en): BE, DE, FR, GB, IT, NL)

1. Copolymerzusammensetzungen, die eine größere Menge eines alternierenden Copolymers aus Kohlenmonoxid und einer oder mehreren olefinisch ungesättigten Verbindungen und eine kleinere Menge eines oder mehrerer Gleitmittelzusätze der allgemeinen Formel X-R enthalten, worin X eine polare Gruppierung mit 1-4 polaren Gruppen und R einen an eine der polaren Gruppen bzw. an die polare Gruppe gebundenen einwertigen Kohlenwasserstoffrest mit 5 bis 30 Kohlenstoffatomen bedeuten, wobei die polare Gruppierung X eine der folgenden Gruppen darstellt: (a) alkoholisches -OH, (b) -O-R', (c) -CO-O-R', (d) -O-CO-R' und (e) -CO-OH, worin R' eine Alkylgruppe mit bis zu 4 Kohlenstoffatomen bedeutet, die gegebenenfalls mit 1 bis 3 aus (1) -O-R'', (2) -CO-O-R'' und (3) -O-CO-R'' ausgewählten Gruppen substituiert ist, wobei die Gruppen R'' unabhängig voneinander jeweils Wasserstoff oder eine Alkylgruppe mit bis zu 4 Kohlenstoffatomen bedeuten.

2. Zusammensetzungen nach Anspruch 1, dadurch gekennzeichnet, daß die Gleitmittelzusätze in einer Menge von 0,05 bis 3 Gew.-%, bezogen auf das Gewicht der Zusammensetzung, enthalten sind.

3. Zusammensetzungen nach Anspruch 2, dadurch gekennzeichnet, daß die Gleitmittelzusätze in einer Menge von 0,1 bis 1 Gew.-%, bezogen auf das Gewicht der Zusammensetzung, enthalten sind.

4. Zusammensetzungen nach einem der Ansprüche 1-3, dadurch gekennzeichnet, daß die polare Gruppierung eine alkoholische -OH-Gruppe aufweist.

5. Zusammensetzungen nach einem der Ansprüche 1-3, dadurch gekennzeichnet, daß die polare Gruppierung X eine Carbonsäureestergruppe -CO-O-R' aufweist, worin R' eine Alkylgruppe mit bis zu 4 Kohlenstoffatomen bedeutet, die gegebenenfalls mit 1 bis 3 aus -O-R'' und -O-CO-R'' ausgewählten Gruppen substituiert ist, wobei die Gruppen R'' unabhängig voneinander jeweils Wasserstoff oder eine Alkylgruppe mit bis zu 4 Kohlenstoffatomen bedeuten.

6. Zusammensetzungen nach Anspruch 5, dadurch gekennzeichnet, daß R' eine 2,3-Dihydroxypropylgruppe bedeutet.

7. Zusammensetzungen nach einem der Ansprüche 1-3, dadurch gekennzeichnet, daß die polare Gruppierung X eine Gruppe -CO-O-R' oder -O-CO-R' aufweist, worin R' eine Alkylgruppe mit bis zu 4 Kohlenstoffatomen wie z.B. eine Methylgruppe bedeutet.

8. Zusammensetzungen nach einem der Ansprüche 1-3, dadurch gekennzeichnet, daß die polare Gruppierung eine Carboxylgruppe aufweist.

9. Zusammensetzungen nach einem der Ansprüche 1-8, dadurch gekennzeichnet, daß der Kohlenwasserstoffrest R ein primärer Rest ist und eine gesättigte lineare Kette von 10-30 Kohlenstoffatomen aufweist.

10. Zusammensetzungen nach einem der Ansprüche 1-3, dadurch gekennzeichnet, daß die Zusätze aus der Gruppe Stearinsäure, Methylmontanat, 1-Docosanol und Glycerin-1-monostearat ausgewählt werden.

11. Zusammensetzungen nach einem der Ansprüche 1-10, dadurch gekennzeichnet, daß sie als Copolymer ein Copolymer aus Kohlenmonoxid und Ethylen oder ein Terpolymer aus Kohlenmonoxid, Ethylen und Propylen enthält und daß die bei 60°C in m-Cresol gemessene GVZ des Co- bzw. Terpolymers 1,0 bis 5,0 dl/g, insbesondere 1,3 bis 4,0 dl/g beträgt.

12. Verfahren zur Verbesserung der Fließeigenschaften von alternierenden Copolymeren aus Kohlenmonoxid und einer oder mehreren olefinisch ungesättigten Verbindungen, bei dem man zu diesen eine kleinere Menge eines oder mehrerer Gleitmittelzusätze der allgemeinen Formel X-R nach einem der Ansprüche 1-10 gibt.

## Patentansprüche (Patentansprüche für folgende(n) Vertragsstaat(en): ES)

1. Verfahren, bei dem man zu einer größeren Menge eines alternierenden Copolymers aus Kohlenmonoxid und einer oder mehreren olefinisch ungesättigten Verbindungen eine kleinere Menge eines Gleitmittelzusatzes gibt, der der allgemeinen Formel X-R entspricht, worin X eine polare Gruppierung mit 1-4 polaren Gruppen und R einen an eine der polaren Gruppen bzw. an die polare Gruppe gebundenen einwertigen Kohlenwasserstoffrest mit 5 bis 30 Kohlenstoffatomen bedeuten, wobei die polare Gruppierung X eine der folgenden Gruppen darstellt: (a) alkoholisches -OH, (b) -O-R', (c) -CO-O-R', (d) -O-CO-R' und (e) -CO-OH, worin R' eine Alkylgruppe mit bis zu 4 Kohlenstoffatomen bedeutet, die gegebenenfalls mit 1 bis 3 aus (1) -O-R'', (2) -CO-O-R'' und (3) -O-CO-R'' ausgewählten Gruppen substituiert ist, wobei die Gruppen R'' unabhängig voneinander jeweils Wasserstoff oder eine Alkylgruppe mit bis zu 4 Kohlenstoffatomen bedeuten.

2. Verfahren nach Anspruch 1, dadurch gekennzeichnet, daß die Gleitmittelzusätze in einer Menge von 0,05 bis 3 Gew.-%, bezogen auf das Gewicht der Zusammensetzung, zugegeben werden.

3. Verfahren nach Anspruch 2, dadurch gekennzeichnet, daß die Gleitmittelzusätze in einer Menge von 0,1 bis 1 Gew.-%, bezogen auf das Gewicht der Zusammensetzung, zugegeben werden.

4. Verfahren nach einem der Ansprüche 1-3, dadurch gekennzeichnet, daß die polare Gruppierung eine alkoholische -OH-Gruppe aufweist.

5. Verfahren nach einem der Ansprüche 1-3, dadurch gekennzeichnet, daß die polare Gruppierung X eine Carbonsäureestergruppe -CO-O-R' aufweist, worin R' eine Alkylgruppe mit bis zu 4 Kohlenstoffatomen bedeutet, die gegebenenfalls mit 1 bis 3 aus -O-R'' und -O-CO-R'' ausgewählten Gruppen substituiert ist, wobei die Gruppen R'' unabhängig voneinander jeweils Wasserstoff oder eine Alkylgruppe mit bis zu 4 Kohlenstoffatomen bedeuten.

6. Verfahren nach Anspruch 5, dadurch gekennzeichnet, daß R' eine 2,3-Dihydroxypropylgruppe bedeutet.

7. Verfahren nach einem der Ansprüche 1-3, dadurch gekennzeichnet, daß die polare Gruppierung X eine Gruppe -CO-O-R' oder -O-CO-R' aufweist, worin R' eine Alkylgruppe mit bis zu 4 Kohlenstoffatomen wie z.B. eine Methylgruppe bedeutet.

8. Verfahren nach einem der Ansprüche 1-3, dadurch gekennzeichnet, daß die polare Gruppierung eine Carboxylgruppe aufweist.

9. Verfahren nach einem der Ansprüche 1-8, dadurch gekennzeichnet, daß der Kohlenwasserstoffrest R ein primärer Rest ist und eine gesättigte lineare Kette von 10-30 Kohlenstoffatomen aufweist.

10. Verfahren nach einem der Ansprüche 1-3, dadurch gekennzeichnet, daß die Zusätze aus der Gruppe Stearinsäure, Methylmontanat, 1-Docosanol und Glycerin-1-monostearat ausgewählt werden.

11. Verfahren nach einem der Ansprüche 1-10, dadurch gekennzeichnet, daß es als Copolymer ein Copolymer aus Kohlenmonoxid und Ethylen oder ein Terpolymer aus Kohlenmonoxid, Ethylen und Propylen enthält und daß die bei 60°C in m-Cresol gemessene GVZ des Co- bzw. Terpolymers 1,0 bis 5,0 dl/g, insbesondere 1,3 bis 4,0 dl/g beträgt.

## Revendications (Revendications pour l'(les) Etat(s) contractant(s) suivant(s): BE, DE, FR, GB, IT, NL)

1. Compositions de copolymères comprenant une proportion majeure d'un copolymère alternant de monoxyde de carbone et d'un ou plusieurs composés à insaturation oléfinique et d'une proportion mineure d'un ou plusieurs additifs lubrifiants de la formule générale X-R dans laquelle X représente un groupement polaire comprenant de 1 à 4 radicaux polaires et R représente un radical hydrocarbyle monovalent possédant de 5 à 30 atomes de carbone, qui est attaché aux (à l'un des) radicaux polaires, où le groupement polaire X en est un choisi parmi les suivants : (a) alcoolique -OH, (b) -O-R', (c) -CO-O-R', (d) -O-CO-R' et (e) -CO-OH, où R' représente un radical alkyle possédant jusqu'à 4 atomes de carbone qui peut être substitué par 1 à 3 radicaux choisis parmi (1) -O-R", (2) -CO-O-R" et (3) -O-CO-R", où chaque symbole R" représente indépendamment un atome d'hydrogène ou un radical alkyle possédant jusqu'à 4 atomes de carbone.

2. Compositions suivant la revendication 1, caractérisées en ce que les additifs lubrifiants sont présents en une proportion de 0,05 à 3% en poids, sur base de la composition.

3. Compositions suivant la revendication 2, caractérisées en ce que les additifs lubrifiants sont présents en une proportion de 0,1 à 1% en poids, sur base du poids de la composition.

4. Compositions suivant l'une quelconque des revendications 1 à 3, caractérisées en ce que le groupement polaire contient un radical alcoolique -OH.

5. Compositions suivant l'une quelconque des revendications 1 à 3, caractérisées en ce que le groupement polaire X contient un radical ester carboxylique -CO-O-R' où R' représente un radical alkyle comportant jusqu'à 4 atomes de carbone, qui peut être substitué par 1 à 3 radicaux choisis parmi -O-R" et -O-CO-R", où chaque symbole R" représente indépendamment un atome d'hydrogène ou un radical alkyle comportant jusqu'à 4 atomes de carbone.

6. Compositions suivant la revendication 5, caractérisées en ce que R' représente un radical 2,3-dihy-droxypropyle.

7. Compositions suivant l'une quelconque des revendications 1 à 3, caractérisées en ce que le groupement polaire X contient un radical -CO-O-R' ou -O-CO-R', où le symbole R' représente un radical alkyle comportant jusqu'à 4 atomes de carbone, comme le radical méthyle.

8. Compositions suivant l'une quelconque des revendications 1 à 3, caractérisées en ce que le groupement polaire contient un radical carboxyle.

9. Compositions suivant l'une quelconque des revendications 1 à 8, caractérisées en ce que le radical hydrocarbyle R est un radical primaire et est constitué d'une chaîne linéaire saturée de 10 à 30 atomes de carbone.

10. Compositions suivant l'une quelconque des revendications 1 à 3, caractérisées en ce que l'on choisit les additifs dans le groupe formé par l'acide stéarique, le montanate de méthyle, le 1-docosanol et le 1-monostéarate de glycérol.

11. Compositions suivant l'une quelconque des revendications 1 à 10, caractérisées en ce qu'elles comprennent, à titre du copolymère, un copolymère du monoxyde de carbone avec l'éthylène, ou un terpolymère du monoxyde de carbone, de l'éthylène et du propylène et en ce que l'IVL du copolymère ou du terpolymère varie de 1,0 à 5,0 dl/g, plus particulièrement de 1,3 à 4,0 dl/g, mesuré à 60°C dans le m-crésol.

12. Procédé d'amélioration des propriétés d'écoulement de copolymères alternants de monoxyde de carbone et d'un ou plusieurs composés oléfiniquement insaturés, caractérisé en ce qu'on leur ajoute une proportion mineure d'un ou plusieurs additifs lubrifiants de la formule générale X-R telle que définie dans l'une quelconque des revendications 1 à 10.

## Revendications (Revendications pour l'(les) Etat(s) contractant(s) suivant(s): ES)

1. Procédé comprenant l'addition d'une proportion mineure d'additif lubrifiant à une proportion majeure d'un copolymère alternant du monoxyde de carbone et d'un ou plusieurs composés à insaturation oléfinique, lequel additif lubrifiant répond à la formule générale X-R dans laquelle X représente un groupement polaire comprenant 1 à 4 radicaux polaires et R représente un radical hydrocarbyle monovalent possédant de 5 à 30 atomes de carbone, qui est attaché aux (à l'un des) radicaux polaires, où le groupement polaire X est l'un des radicaux suivants : (a) alcoolique -OH, (b) -O-R', (c) -CO-O-R', (d) -O-CO-R' et (e) -CO-OH, où R' représente un radical alkyle comportant jusqu'à 4 atomes de carbone, qui peut être substitué par 1 à 3 radicaux choisis parmi (1) -O-R", (2) -CO-O-R" et (3) -O-CO-R", où chaque symbole R" représente indépendamment un atome d'hydrogène ou un radical alkyle comportant jusqu'à 4 atomes de carbone.

2. Procédé suivant la revendication 1, caractérisé en ce que l'on ajoute les additifs lubrifiants en une proportion de 0,05 à 3% en poids, sur base du poids de la composition.

3. Procédé suivant la revendication 2, caractérisé en ce que l'on ajoute les additifs lubrifiants en une proportion de 0,1 à 1% en poids, sur base du poids de la composition.

4. Procédé suivant l'une quelconque des revendications 1 à 3, caractérisé en ce que le groupement polaire contient un radical alcoolique -OH.

5. Procédé suivant l'une quelconque des revendications 1 à 3, caractérisé en ce que le groupement polaire X contient un radical ester carboxylique -CO-O-R' où le symbole R' représente un radical alkyle comportant jusqu'à 4 atomes de carbone, qui peut être substitué par 1 à 3 radicaux choisis parmi -O-R" et -O-CO-R", où chaque symbole R" représente indépendamment un atome d'hydrogène ou un radical alkyle comportant jusqu'à 4 atomes de carbone.

6. Procédé suivant la revendication 5, caractérisé en ce que R' représente un radical 2,3-dihydroxypropyle.

7. Procédé suivant l'une quelconque des revendications 1 à 3, caractérisé en ce que le groupement polaire X contient un radical -CO-O-R' ou -O-CO-R', où le symbole R' représente un radical alkyle comportant jusqu'à 4 atomes de carbone, comme le groupe méthyle.

8. Procédé suivant l'une quelconque des revendications 1 à 3, caractérisé en ce que le groupement polaire contient un radical carboxyle.

9. Procédé suivant l'une quelconque des revendications 1 à 8, caractérisé en ce que le radical hydrocarbyle R est un radical primaire et est constitué d'une chaîne linéaire saturée de 10 à 30 atomes de carbone.

10. Procédé suivant l'une quelconque des revendications 1 à 3, caractérisé en ce que l'on choisit les additifs dans le groupe formé par l'acide stéarique, le montanate de méthyle, le 1-docosanol et le 1-monostéarate de glycérol.

11. Procédé suivant l'une quelconque des revendications 1 à 10, caractérisé en ce qu'il comprend, à titre de copolymère, un copolymère du monoxyde de carbone avec l'éthylène, ou un terpolymère du monoxyde de carbone, de l'éthylène et du propylène, et en ce que l'IVL du copolymère ou du terpolymère varie de 1,0 à 5,0 dl/g, plus particulièrement de 1,3 à 4,0 dl/g, mesuré à 60°C dans le m-crésol.
